# FASCICULE DE BREVET EUROPEEN

(11) **EP 3 301 044 B1**
(45) Date de publication et mention de la délivrance du brevet: **27.10.2021**
(21) Numéro de dépôt: 17192614.0
(22) Date de dépôt: 22.09.2017
(51) Int. Cl.: B65G 47/08, B65G 47/71, B65G 47/64, B65G 47/84

(54) **SYSTEME DE REPARTITION D'OBJETS**
SYSTEM ZUR VERTEILUNG VON GEGENSTÄNDEN
SYSTEM FOR DISTRIBUTING OBJECTS

(30) Priorité: 30.09.2016 FR 1659416
(43) Date de publication de la demande: 04.04.2018
(73) Titulaire: SIDEL PACKING SOLUTIONS, 21910 Corcelles-les-Cîteaux (FR)
(72) Inventeur: RABEC, Dominique, 21910 CORCELLES LES CÎTEAUX (FR)
(74) Mandataire: Sidel Group

(56) Documents cités:
- WO-A1-2012/028970
- DE-C- 233 788
- FR-A- 1 501 928
- FR-A1- 2 258 326
- FR-A1- 2 988 709
- JP-A- H1 077 114
- JP-U- S6 279 723

## Description

La présente invention se situe dans le domaine du convoyage d'objets au sein d'une ligne industrielle de traitement. Elle concerne plus particulièrement un système de répartition d'objets, apte à répartir un flux d'objets en amont sur plusieurs voies en aval.

Des solutions existent, permettant de dévier des articles d'une voie unique vers une pluralité de voies.

Le document US20080264759 propose un dispositif permettant de guider des produits venant d'une voie unique, vers une voie donnée. Un tronçon mobile est utilisé afin d'orienter les produits vers la sortie voulue. Ce dispositif comporte en outre un moyen de séparation, permettant de créer un espace entre différents trains de produits.

Cependant ces solutions n'assurent pas un maintien satisfaisant des objets pendant les phases de changement de voies. Elles ne sont donc pas utilisables à des cadences élevées, à cause de risques trop importants de chutes d'objets et/ou de bourrage. De plus la fiabilité de ces dispositifs n'étant pas parfaite, la quantité d'objets en sortie de déviateur ne peut pas être commandée de manière exacte et des détecteurs sont nécessaires en sortie de déviateur afin de corriger les éventuelles erreurs. Le document WO 2012/028970 A1 divulgue un système de répartition d'objets selon le préambule de la revendication 1 et un procédé de répartition d'objets par le moyen dudit système.

La présente invention a pour objet de pallier au moins en partie à ces inconvénients. A cet effet, elle propose un système de répartition d'objets selon la revendication 1.

Grâce à ces dispositions, la répartition des objets dans les files en sortie est très précise. On connaît exactement la quantité de produit délivrée dans chaque file du flux de sortie. On peut alors se passer d'une zone d'accumulation tampon entre le déviateur et la machine en aval, de fardelage ou d'encaissage, et aucun moyen de détection d'erreur n'est nécessaire entre le système de répartition et la machine en aval. En outre, le fonctionnement peut être régulé avec précision. La vitesse du système de répartition peut donc être régulée directement selon les besoins de la machine en aval. La notion d'immédiatement en amont doit être comprise comme suffisamment proche pour qu'il devienne quasiment impossible que des objets se séparent de leur train d'objets entre le moyen de création de trains et les files du flux de sortie. Typiquement l'extrémité aval du moyen de création de trains se trouve au plus à deux objets de l'entrée d'une file du flux de sortie.

Selon d'autres caractéristiques :
- ledit moyen de création de trains peut comporter un guide d'entrée configuré pour maintenir le flux d'entrée hors de portée dudit doigt sur une première partie de la longueur du moyen de création de trains, et pour engager les objets en prise avec ledit doigt sur une deuxième partie de la longueur dudit moyen de création de trains, ainsi les doigts viennent en prise avec les objets alors qu'ils sont perpendiculaires au flux d'objets, ce qui facilite l'insertion des doigts entre les objets.
- ledit moyen de création de trains peut être mobile en translation dans le sens transversal à la direction du flux, de sorte à pouvoir alimenter en objets, successivement diverses files du flux de sortie, et ledit déviateur est disposé en amont dudit moyen de création de trains, de sorte à dévier ledit flux d'entrée vers l'entrée du moyen de création de trains, ce qui constitue un moyen simple et robuste de réalisation,
- ledit moyen de création de trains peut être mobile en rotation autour d'un axe disposé à proximité de l'entrée du moyen de création de trains et de la file d'entrée, de sorte à recevoir le flux d'entrée en un point fixe, et à positionner sa sortie successivement devant diverses files du flux de sortie, le moyen de création de trains constituant lui-même le déviateur, ce qui rend le système de répartition plus simple, moins encombrant, et qui réduit les risques de chutes d'objet, de bourrage et d'erreur de répartition induits par l'interface entre le déviateur et le moyen de création de trains ; cela permet aussi un pilotage plus simple.

La présente invention concerne aussi un procédé de répartition d'objets selon la revendication 5.

Grâce à ces dispositions, les objets sont répartis dans les files en sortie de manière très précise. La vitesse du système de répartition peut donc être régulée directement selon les besoins de la machine en aval, et aucun moyen de détection d'erreur n'est nécessaire entre le système de répartition et la machine en aval.

Selon d'autres caractéristiques :
- Le procédé peut comporter avant ledit freinage des objets en amont dudit premier doigt les étapes suivantes:
   - maintien hors de portée desdits doigts en entrée de moyen de création de trains,
   - guidage vers ledit premier doigt des objets jusqu'à la prise entre ledit premier doigt et les objets.
   De cette façon, les doigts viennent en prise avec les objets alors qu'ils sont perpendiculaires au flux d'objets, ce qui facilite l'insertion des doigts entre les objets.

La présente invention sera mieux comprise à la lecture de la description détaillée qui fait suite, en référence aux figures annexées dans lesquelles :
- La figure 1 est une vue du dessus d'un système de répartition selon l'invention dans un premier mode de réalisation, dans une première position.
- La figure 2 est une vue du dessus d'un système de répartition selon l'invention dans un premier mode de réalisation, dans une deuxième position.
- La figure 3 est une vue du dessus d'un système de répartition selon l'invention dans un deuxième mode de réalisation, dans une première position.
- La figure 4 est une vue du dessus d'un système de répartition selon l'invention dans un deuxième mode de réalisation, dans une deuxième position.

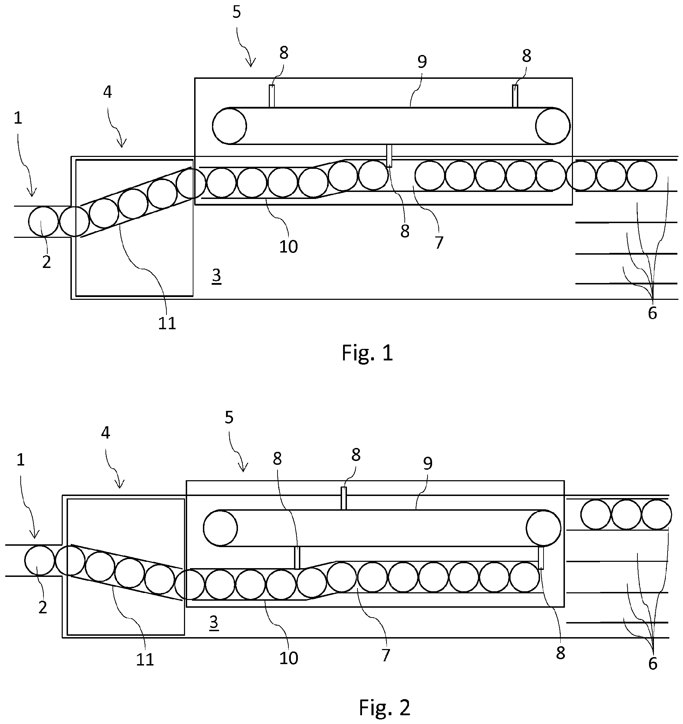

Le système de répartition d'objets selon l'invention, représenté aux fig. 1 à 4, est placé entre une machine amont et une machine en aval. La machine amont alimente le système de répartition par une ligne d'entrée 1 transportant un flux d'objets 2 sous forme d'une file unique. Le système de répartition comporte une bande transporteuse 3, un déviateur 4 et un moyen de création de trains 5, qui peuvent être tous montés sur un châssis commun. Le moyen de création de trains 5, encore appelé dans la description ci-après loteur 5, contribue à créer des espaces dans la colonne unifilaire d'objets 2, pour transformer une colonne compacte en trains successifs séparés. Le loteur 5 comprend des doigts mobiles longitudinalement, contre lesquelles vient s'appuyer la colonne compacte d'objets 2. Les différences de vitesse entre la bande transporteuse 3 et lesdites doigts, permettent de créer lesdits espaces. En sortie du système de répartition, les objets 2 sont répartis dans différentes files du flux de sortie, par exemple matérialisées par des voies de sortie 6, la machine en aval nécessitant d'être alimentée par une pluralité contrôlée de files généralement séparées entre elles par des parois.

Les objets 2 peuvent par exemple être des bouteilles en plastique, et la machine amont peut être une étiqueteuse de bouteilles. La machine en aval peut être une fardeleuse. Ce type de machine produit des blocs en enveloppant, par exemple dans un film en plastique, un certain nombre d'objets 2. Par exemple si on veut faire des packs de six bouteilles, trois en longueur et deux en largeur, la fardeleuse nécessite une entrée à trois voies, et elle va traiter les bouteilles deux par deux dans chaque voie. La fardeleuse sait introduire le film entre deux objets successifs dans un couloir d'entrée, mais elle a besoin que dans toutes les files parallèles considérées les objets soient alignés entre eux. Dans l'exemple ci-dessus, la fardeleuse prend deux objets dans chaque couloir ; le premier objet du premier couloir doit être aligné selon une ligne perpendiculaire aux couloirs avec le premier objet des deux autres couloirs. La fardeleuse peut produire des blocs de différentes tailles, selon les réglages effectués sur la machine, pourvu qu'ils soient de forme rectangulaire. On peut aussi envisager que la fardeleuse réalise plusieurs blocs en parallèle, par exemple deux blocs de 2 x 2 en parallèle.

Selon l'invention représenté aux fig. 1 à 4, le loteur 5 comporte un couloir 7 longitudinal, des doigts 8 et un moyen d'entraînement 9 tel qu'une courroie ou une chaîne, parallèle au couloir 7. Les doigts 8 sont fixés sur le moyen d'entraînement, et se déplacent parallèlement aux objets 2 dans le sens du flux des objets 2, puis effectuent un retour avant de reprendre leur course parallèle aux objets 2.

Par exemple les doigts 8 peuvent être disposés sur une chaine 9, s'enroulant autour d'un pignon moteur et d'un pignon de renvoi.

Lorsqu'un doigt 8 se déplace dans le sens du flux des objets 2, il s'insère dans le flux et sépare les objets 2 en amont du doigt 8 des objets 2 en aval du doigt 8. La colonne d'objets 2 est compacte depuis l'amont du système de répartition et jusqu'à un premier doigt 8. La vitesse du moyen d'entraînement 9 étant inférieure à la vitesse de la bande transporteuse 3, le premier doigt 8 limite donc la vitesse de la colonne compacte d'objets 2 à une valeur inférieure à celle de la bande transporteuse 3. Lorsqu'il arrive en fin de sa course parallèle aux objets 2 et juste avant d'effectuer son retour, le premier doigt 8 s'escamote ce qui a alors pour effet de libérer les objets 2 jusqu'au doigt 8 suivant en amont et permettre à la bande transporteuse 3 de les accélérer. On crée ainsi un espace entre les objets 2 qui s'étendent vers l'amont depuis le doigt 8 suivant, et les objets 2 en aval, qui viennent d'être libérés par le premier doigt 8. L'espace entre tous les doigts 8 est identique, afin que les trains soient composés d'un nombre fixe d'objets 2. Dans un mode préféré de l'invention représenté aux figs. 1 à 4, le loteur 5 comporte trois doigts 8. La présence de trois doigts 8 permet de s'assurer que lorsqu'un doigt 8 s'insère dans le flux d'objets 2, un autre doigt 8 soit encore en prise avec les objets 2 en aval du couloir 7. Ainsi les trains sont formés d'une colonne compacte d'objets 2, et il est assuré que chaque train en sortie du loteur 5 soit constitué du même nombre d'objets 2, la taille des trains correspondant à l'espacement entre deux doigts 8.

Le couloir 7 du loteur 5 peut comporter un guide d'entrée 10, disposé parallèle au moyen d'entraînement 9, qui maintient le flux d'objets 2 hors de portée des doigts 8 dans une première partie du couloir 7. Dans ce mode de réalisation, c'est seulement en aval du guide d'entrée 10 que les objets 2 sont rapprochés des doigts 8 qui sont alors aptes à s'intercaler entre les objets 2. De cette façon, les doigts 8 viennent en prise avec les objets 2 alors qu'ils sont perpendiculaires au flux d'objets 2, ce qui facilite l'insertion des doigts 8 entre les objets 2.

En effet si on ne prévoit pas un tel guide d'entrée 10, les objets 2 sont alors à portée du doigt 8 au moment où celui-ci revient côté flux ; celui-ci effectue à ce moment-là un mouvement de rotation en même temps qu'un mouvement de translation, et sa vitesse linéaire en extrémité de doigt 8 peut être trop importante.

On peut par exemple prévoir que le guide d'entrée 10 maintienne les objets 2 hors de portée du doigt 8 sur une longueur de deux objets 2, puis pousse les objets 2 vers le doigt 8.

Dans un premier mode de réalisation représenté aux fig. 1 et 2, le déviateur 4 disposé en amont du loteur 5 comporte un guide déviateur 11 composé par exemple de deux parois parallèles. Le guide déviateur 11 est configuré pour accueillir les objets 2 en entrée du système de répartition, puis les diriger sensiblement en face de la voie de sortie 6 à laquelle les objets 2 sont destinés. Dans ce mode de réalisation, le loteur 5 est mobile en translation dans une direction transversale au flux d'objets 2, afin de s'aligner avec le guide déviateur 11 en amont et successivement avec les différentes voies de sortie 6 à laquelle sont destinés les objets 2 en aval.

Pour changer de voie de sortie 6, le loteur 5 se déplace de sa position initiale vers une position où son couloir 7 se trouve bien aligné avec la voie de sortie 6 sélectionnée pour recevoir les objets 2. Lorsqu'un train d'objets 2 vient d'être entièrement transféré vers une voie de sortie 6, le loteur 5 effectue un mouvement de translation dans une direction transversale au flux des objets 2. Plus précisément, une fois que l'objet 2 le plus en amont du train précédent est suffisamment engagé dans la voie de sortie 6, le loteur 5 est déplacé de sorte que son embouchure en aval arrive en face de la voie de sortie 6 suivante, pour que les objets 2 du train suivant y entrent tous. L'espace entre deux trains, créé par les doigts 8, correspond au minimum au temps nécessaire au loteur 5 pour se positionner en face de la voie de sortie 6 vers laquelle le prochain train doit être dirigé. Ainsi en figure 2, le loteur 5 vient de se positionner en face d'une voie de sortie 6 et s'apprête à y transférer le prochain train.

Lorsque le loteur 5 effectue un mouvement de translation, le guide déviateur 11 effectue un mouvement de rotation afin que la sortie du guide déviateur 11 soit toujours positionnée en face de l'entrée du couloir 7. En effet, le flux d'objets 2 en provenance de la ligne d'entrée 1 est continu et en cas de non alignement de la sortie du guide déviateur 11 et de l'entrée du couloir 7, il y a un risque de chute d'objets 2 et d'entrée d'objets 2 non lotés dans les voies de sortie 6.

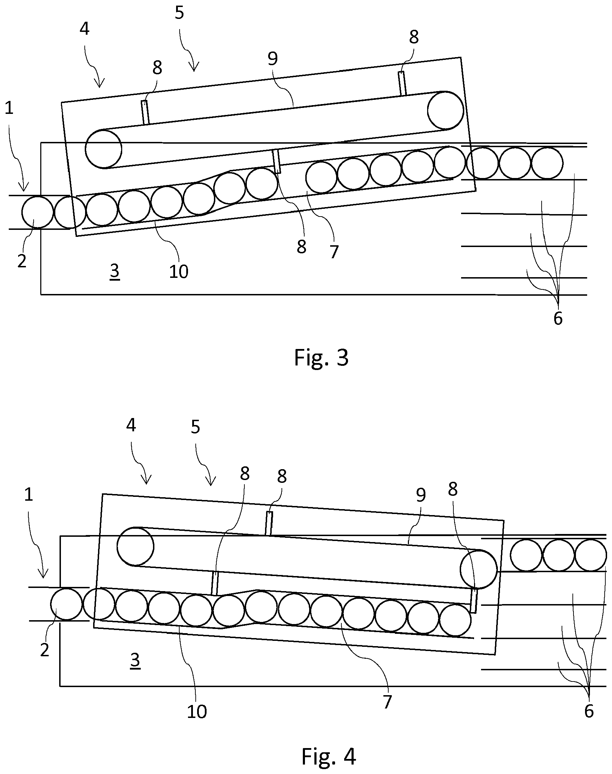

Dans un second mode de réalisation représenté aux fig. 3 et 4, le loteur 5 est mobile en rotation autour d'un axe disposé à proximité de l'entrée du loteur 5 et de la ligne d'entrée 1, afin de pouvoir s'aligner directement avec la ligne d'entrée 1 en amont et la voie de sortie 6 à laquelle sont destinés les objets 2 en aval. De cette façon le loteur 5 constitue lui-même le déviateur 4, ce qui simplifie le système de répartition et fait gagner de l'espace.

Pour changer de voie de sortie 6, le loteur 5 se déplace de sa position initiale vers une position où son couloir 7 se trouve bien aligné avec la voie de sortie 6 sélectionnée pour recevoir les objets 2. Lorsqu'un train d'objets 2 vient d'être entièrement transféré vers une voie de sortie 6, le loteur 5 effectue un mouvement de rotation autour d'un axe disposé à proximité de l'entrée du loteur 5 et de la ligne d'entrée 1. Plus précisément, une fois que l'objet 2 le plus en amont du train précédent est suffisamment engagé dans la voie de sortie 6, le loteur 5 est déplacé de sorte que son embouchure en aval arrive en face de la voie de sortie 6 suivante, pour que les objets 2 du train suivant y entrent tous. L'espace entre deux trains, créé par les doigts 8, correspond au minimum au temps nécessaire au loteur 5 pour se positionner en face de la voie de sortie 6 vers laquelle le prochain train doit être dirigé. Ainsi en figure 2, le loteur 5 vient de se positionner en face d'une voie de sortie 6 et s'apprête à y transférer le prochain train.

Dans le second mode de réalisation, le loteur 5 remplissant les fonctions du déviateur 4, les risques de chutes d'objets 2 ou d'arrivée dans les voies de sortie 6 d'objets 2 non lotés, liés à un mauvais alignement du déviateur 4 et du loteur 5, sont encore réduits.

La vitesse du système de répartition peut être régulée directement selon les besoins de la machine en aval. En effet, le lotage étant effectué immédiatement en amont de la machine en aval, on assure que le changement de voie de sortie 6 se fait précisément pendant le trou constitué lors de la séparation d'un train à l'autre. En outre, le nombre d'objets 2 libéré dans chaque voie de sortie 6 est connu précisément, ce qui évite la mise en oeuvre d'une zone d'accumulation en aval, et qui permet de coordonner les fonctionnements. Si on dispose le loteur 5 en amont du déviateur 4, les objets 2 peuvent bouger les uns par rapport aux autres dans le déviateur 4, et il arrive qu'un objet 2 se retrouve dans la voie de sortie précédant ou suivant celle où il devrait se trouver. Il s'en suit une mauvaise maîtrise des quantités présentes dans chaque voie de sortie. On est alors obligé de surveiller l'évolution de ces quantités, de disposer des capteurs alertant lorsque les quantités s'écartent trop de la quantité prévue, soit en plus (maxi) soit en moins (mini), d'où leur nom de capteur mini-maxi, et prévoir des procédures spécifiques de rattrapage. Cela complique sensiblement la programmation du dispositif de répartition, et nécessite de prévoir des surlongueurs des voies de sortie, et donc une augmentation de la longueur nécessaire d'implantation.

En outre, la taille de chaque train est très précisément respectée grâce à leur maintien amont et aval par les doigts 8 lors de leur traversée du couloir 7, et la quantité d'objets 2 délivrés dans chaque voie de sortie 6 dépend précisément de la vitesse du système de répartition. On peut ainsi supprimer les capteurs mini maxi, ainsi que les procédures de rattrapage, et gagner de la place en implantation des machines, et réduire en conséquence les coûts d'investissement.

Le fait de maîtriser parfaitement la quantité d'objets délivrés dans chaque voie de sortie 6 présente de nombreux avantages. En plus de ceux déjà cités, il permet de piloter la machine amont directement de façon coordonnée avec la machine en aval. Si on a besoin de plus d'objets 2 au niveau de la machine en aval, il suffit d'augmenter la cadence de la machine amont (dans la mesure de ses possibilités propres bien sûr), et d'adapter la vitesse du déviateur 4 et du loteur 5. Il n'y a pas à s'occuper d'effets indésirables, le déviateur/loteur fait parfaitement son travail.

Le système de répartition selon l'invention est utilisé selon le procédé suivant, dans le but de créer, à partir d'un flux d'entrée d'objets 2 en provenance d'une ligne d'entrée 1 comportant une file unique, un flux de sortie d'objets 2 réparti dans une pluralité de voies de sortie 6 :
- entraînement des objets 2 dans le sens du flux par la bande transporteuse 3,
- entrée des objets 2 dans le déviateur 4 et le loteur 5,
- constitution d'un train, et séparation du train des objets 2 se trouvant en amont et en aval du train,
- déplacement de l'extrémité avale du loteur 5 vers une autre voie de sortie 6 du flux de sortie,
- introduction du train dans la voie de sortie 6 du flux de sortie vers lequel s'est déplacée l'extrémité avale du loteur 5.

Le procédé ci-dessus est complété des étapes suivantes après l'entrée des objets 2 dans le loteur 5 :
- accumulation des objets 2 en amont contre un premier doigt 8, en vue de les séparer des objets 2 en aval du premier doigt 8 jusqu'à la prise entre le doigt 8 suivant et les objets 2 du flux d'entrée,
- accumulation des objets 2 en amont contre le doigt 8 suivant, en vue de les séparer des objets 2 situés entre le doigt 8 suivant et le premier doigt 8.
- accélération, par escamotage du premier doigt 8, des objets 2 qui étaient situés entre le premier doigt 8 et le doigt 8 suivant, constituant un train qui s'engage dans une des voies de sortie 6.

Dans un mode particulier de réalisation, le procédé est encore complété par les étapes suivantes avant l'accumulation des objets 2 en amont contre le premier doigt 8 :
- maintien hors de portée des doigts 8 en entrée du loteur 5,
- guidage vers le premier doigt 8 des objets 2 jusqu'à la prise entre le premier doigt 8 et les objets 2.

Comme indiqué précédemment, le moyen de création de trains 5 est destiné à séparer le flux d'entrée unifilaire d'objets 2 en trains d'une quantité prédéterminée d'objets 2. Chaque train est donc un groupe de plusieurs objets 2 disposés les uns derrière les autres. Un train est une colonne d'un nombre prédéterminé d'objets 2, qui s'étend dans le sens du flux. Deux objets successifs d'un même train sont de préférence en contact l'un de l'autre. Le moyen de création de trains 5 crée des espaces au sein d'une file d'objets, ces espaces séparant un train d'un autre train.

De manière générale, le déviateur 4 et le moyen de création de trains 5 sont mobiles au sein du système de répartition d'objet.

Dans un premier mode de réalisation illustré dans les figures 1 et 2, le déviateur 4 est mobile en rotation par rapport à la ligne d'entrée 1 et le moyen de création de trains 5 est mobile en translation par rapport à la file d'entrée 1. Grâce à ces mouvements conjugués de rotation et de translation les trains sont acheminés vers les lignes de sortie 6.

Dans un second mode de réalisation illustré dans les figures 3 et 4, le déviateur 4 et le moyen de création de trains 5 forment un unique système de répartition d'objet. Ce système de répartition est mobile en rotation par rapport à la file d'entrée 1 pour acheminer les trains vers les lignes de sortie 6.

Comme indiqué précédemment, selon l'invention, le loteur 5 comporte un couloir 7 longitudinal, des doigts 8 et un moyen d'entraînement 9 parallèle au couloir 7. Ledit moyen d'entraînement 9 est J au moins une bande sans fin 9 enroulée autour de deux enroulements. Ainsi, le moyen de création de trains 5 comprend un couloir longitudinal 7 et au moins deux doigts 8 fixés sur au moins une bande sans fin 9 enroulée autour de deux enroulements. La au moins une bande sans fin 9 s'étend parallèlement au couloir longitudinal 7 et les deux enroulements se situent l'un derrière l'autre dans le sens du flux. Le moyen de création de trains 5 est disposé de sorte que les doigts 8 soient aptes à entrer en contact avec les objets 2 au moins sur une partie de leur trajet dans le sens du flux. Les doigts 8 sont espacés de sorte à pouvoir être chacun en prise avec des objets 2 distincts.

La bande sans fin peut par exemple être figurée par une chaîne ou une courroie et les enroulements peuvent être de préférence des poulies ou des pignons, dont les axes sont transversaux par rapport au sens du flux. L'un des enroulements amont ou aval est prévu pour être entrainé en rotation au moyen par exemple d'un servomoteur, de manière à entrainer la bande sans fin et donc les doigts 8 autour des enroulements, et de manière que la bande sans fin 9 se déplace dans le même sens que la bande transporteuse 3.

Chaque doigt 8 a globalement la forme d'une plaque disposée perpendiculairement à la bande sans fin. Il constitue un obstacle au passage d'objets 2 pour la formation d'un train.

Ainsi, le moyen de création de trains 5 peut être configuré de sorte que, lorsqu'un doigt 8 s'insère dans le flux d'objets 2, un autre doigt 8 soit encore en prise avec les objets 2 en aval du couloir 7. Ainsi les trains sont formés d'une colonne compacte d'objets 2, et il est assuré que chaque train en sortie du loteur 5 soit constitué du même nombre d'objets 2, la taille des trains correspondant à l'espacement entre deux doigts 8. Pour ce faire, la vitesse de la bande sans fin 9 peut être adaptée. Elle peut également être adaptée en fonction du flux souhaité dans la machine aval au système de répartition.

Un tel mode de réalisation permet avantageusement de s'affranchir de tout moyen de détection destiné à comptabiliser le nombre d'objets défilant afin de créer les trains, puisqu'ils sont créés automatiquement à mesure du défilement de la au moins une bande sans fin 9 et donc des doigts 8.

Selon une première variante de ce mode de réalisation précédemment détaillée, le moyen de création de trains 5 comprend une unique bande sans fin 9. Selon cette variante, au moins trois doigts 8 sont préférablement fixés sur la bande sans fin 9 de sorte que lorsqu'un doigt 8 s'insère dans le flux d'objets 2, un autre doigt 8 soit encore en prise avec les objets 2 en aval du couloir 7, comme décrit précédemment. Les doigts 8 sont régulièrement espacés sur la bande sans fin 9 de sorte que les trains soient composés d'un nombre fixe d'objets 2. La bande sans fin 9 circule en principe à une vitesse constante et légèrement inférieure à la vitesse de circulation de la bande transporteuse 3.

Selon une seconde variante, le moyen de création de train 5 comprend au moins deux bandes sans fin 9 et sur chacune de ces bandes sans fin 9 est fixé au moins un doigt 8. Préférablement, le moyen de création de train 5 est formé de deux doigts 8, l'un étant fixé sur une première bande sans fin 9, l'autre, sur une deuxième bande sans fin 9.

Dans ce cas, la première bande sans fin et la deuxième bande sans fin sont disposées côte à côte et enroulées autour d'enroulements distincts. Ainsi, les deux bandes sans fin 9 sont entrainées distinctement afin de pouvoir circuler indépendamment l'une de l'autre.

Afin de gagner de la place, l'enroulement moteur constitue de préférence l'enroulement amont d'une des bandes 9 et l'enroulement aval de l'autre bande 9 dans le sens du flux. Il en résulte que l'enroulement asservi constitue de préférence l'enroulement amont d'une des bandes 9 et l'enroulement aval de l'autre bande 9 dans le sens du flux. Les axes des enroulements de la première bande sans fin et de la deuxième bande sans fin sont de préférence confondus. Avantageusement, selon cette seconde variante avec deux bandes sans fin 9, la vitesse des doigts 8 n'est pas constante. Elle est ajustée pour former des trains d'objets 2 de longueur constante. La vitesse des bandes sans fin 9 est alors programmée pour que :
- lorsque le doigt 8 d'une bande 9 s'insère dans le flux d'objets 2, le doigt 8 de l'autre bande 9 soit encore en prise avec les objets 2 en aval du couloir 7, et
- la distance entre les deux doigts 8 consécutifs en prise avec des objets 2 soient à une distance constante correspondant à la longueur des trains formés. Autrement dit, lorsqu'un doigt 8 est inséré dans le flux d'objets 2, il circule à une vitesse constante V1, de préférence inférieure à la vitesse de la bande transporteuse 3 pour s'assurer que les objets 2 en amont du doigt 8 forment une file compacte, c'est-à-dire sans espace entre les objets 2. Lorsqu'il est escamoté, il accélère généralement sur son trajet retour de sorte à pouvoir être à la distance souhaitée du doigt 8 de l'autre bande 9 qui circule à une vitesse V1 et est en prise avec des objets 2, au moment de s'insérer à nouveau dans le flux. Il circule alors à une vitesse V1 jusqu'à être à nouveau escamoté.

## Revendications

1. Système de répartition d'objets destiné à être intercalé entre une machine amont délivrant un flux d'entrée d'objets (2) sous forme d'une file unique et une machine en aval nécessitant un flux de sortie d'objets (2) sous forme d'une pluralité contrôlée de files, comportant une bande transporteuse (3) configurée pour supporter et entrainer les objets (2) dans le sens du flux, un déviateur (4) configuré pour dévier le flux d'entrée vers l'une des files du flux de sortie, et un moyen de création de trains (5), configuré pour séparer le flux d'entrée en trains d'une quantité prédéterminée d'objets (2), ledit moyen de création de trains (5) étant disposé immédiatement en amont des files du flux de sortie et comportant un couloir longitudinal (7) et au moins une bande sans fin (9) qui s'étend parallèlement au couloir (7) et qui est enroulée autour de deux enroulements, **caractérisé par** au moins deux doigts (8) fixés sur ladite au moins une bande sans fin (9), chacun desdits doigts (8) étant destiné, lorsqu'il se déplace dans le sens du flux, à séparer les objets (2) situés en aval de ceux situés en amont dudit doigt (8).

2. Système de répartition selon la revendication précédente, dans lequel ledit moyen de création de trains (5) comporte un guide d'entrée (10) configuré pour maintenir le flux d'entrée hors de portée dudit doigt (8) sur une première partie de la longueur du moyen de création de trains (5), et pour engager les objets (2) en prise avec ledit doigt (8) sur une deuxième partie de la longueur dudit moyen de création de trains (5).

3. Système de répartition selon l'une des revendications précédentes, dans lequel ledit moyen de création de trains (5) est mobile en translation dans le sens transversal à la direction du flux, de sorte à pouvoir alimenter en objets (2), successivement diverses files du flux de sortie, et ledit déviateur (4) est disposé en amont dudit moyen de création de trains (5), de sorte à dévier ledit flux d'entrée vers l'entrée du moyen de création de trains (5).

4. Système de répartition selon l'une des revendications 1 à 2, dans lequel ledit moyen de création de trains (5) est mobile en rotation autour d'un axe disposé à proximité de l'entrée du moyen de création de trains (5) et de la file d'entrée, de sorte à recevoir le flux d'entrée en un point fixe, et à positionner sa sortie successivement devant diverses files du flux de sortie, le moyen de création de trains (5) constituant lui-même le déviateur (4).

5. Procédé de répartition d'objets (2) délivrés selon un flux d'entrée d'objets (2) sous forme d'une file unique en un flux de sortie d'objets (2) sous forme d'une pluralité contrôlée de files, par le moyen d'un système selon l'une des revendications précédentes, comportant les étapes suivantes :
- entrainement des objets (2) dans le sens du flux,
- entrée desdits objets (2) dans le déviateur (4) et le moyen de création de trains (5),
- constitution d'un train, et séparation dudit train des objets (2) amont et aval dudit train,
- déplacement de l'extrémité avale du moyen de création de trains (5) vers une autre file du flux de sortie,
- introduction dudit train dans ladite autre file,
ledit procédé comportant après l'entrée desdits objets (2) dans le moyen de création de trains (5), les étapes suivantes :
- accumulation des objets (2) en amont contre un premier doigt (8), en vue de les séparer des objets (2) en aval dudit premier doigt (8) jusqu'à la prise entre le doigt (8) suivant et les objets (2) du flux d'entrée,
- accumulation des objets (2) en amont contre le doigt (8) suivant, en vue de les séparer des objets (2) situés entre ledit doigt (8) suivant et ledit premier doigt (8),
- accélération, par escamotage du premier doigt (8), des objets (2) qui étaient situés entre le premier doigt (8) et le doigt (8) suivant, constituant un train qui s'engage dans une des files du flux de sortie.

6. Procédé selon la revendication précédente, comportant avant ladite accumulation des objets (2) en amont contre ledit premier doigt (8) les étapes suivantes :
- maintien hors de portée desdits doigts (8) en entrée de moyen de création de trains (5),
- guidage vers ledit premier doigt (8) des objets (2) jusqu'à la prise entre ledit premier doigt (8) et les objets (2).

## Patentansprüche

1. System zur Verteilung von Gegenständen, das dazu bestimmt ist, zwischen einer stromaufwärts gelegenen Maschine, die einen Eingangsstrom von Gegenständen (2) in Form einer einzigen Reihe bereitstellt, und einer stromabwärts gelegenen Maschine, die einen Ausgangsstrom von Gegenständen (2) in Form einer gesteuerten Vielzahl von Reihen benötigt, eingefügt zu sein, umfassend ein Förderband (3), das dazu konfiguriert ist, die Gegenstände (2) in Richtung des Stroms zu tragen und zu befördern, eine Umlenkeinheit (4), die dazu konfiguriert ist, den Eingangsstrom zu einer der Reihen des Ausgangsstroms umzulenken, und ein Mittel zur Bildung von Folgen (5), das dazu konfiguriert ist, den Eingangsstrom in Folgen mit einer vorgegebenen Menge von Gegenständen (2) aufzuteilen, wobei das Mittel zur Bildung von Folgen (5) unmittelbar stromaufwärts der Reihen des Ausgangsstroms angeordnet ist und einen Längsgang (7) und mindestens ein Endlosband (9), das sich parallel zu dem Gang (7) erstreckt und um zwei Spulen gewickelt ist, umfasst, **gekennzeichnet durch** mindestens zwei Finger (8), die an dem mindestens einen Endlosband (9) befestigt sind, wobei jeder der Finger (8), wenn er sich in der Richtung des Stroms bewegt, dazu bestimmt ist, die Gegenstände (2), die sich stromabwärts des Fingers (8) befinden, von denen, die sich stromaufwärts von diesem befinden, zu trennen.

2. Verteilungssystem nach dem vorhergehenden Anspruch, wobei das Mittel zur Bildung von Folgen (5) eine Eingangsführung (10) umfasst, die dazu konfiguriert ist, den Eingangsstrom über einen ersten Teil der Länge des Mittels zur Bildung von Folgen (5) außer Reichweite des Fingers (8) zu halten und die Gegenstände (2) über einen zweiten Teil der Länge des Mittels zur Bildung von Folgen (5) mit dem Finger (8) in Eingriff zubringen.

3. Verteilungssystem nach einem der vorhergehenden Ansprüche, wobei das Mittel zur Bildung von Folgen (5) quer zu der Richtung des Stroms verschiebbar ist, um verschiedenen Reihen des Ausgangsstroms nacheinander Gegenstände (2) zuführen zu können, und die Umlenkeinheit (4) stromaufwärts des Mittels zur Bildung von Folgen (5) angeordnet ist, um den Eingangsstrom zu dem Eingang des Mittels zur Bildung von Folgen (5) hin umzulenken.

4. Verteilungssystem nach einem der Ansprüche 1 bis 2, wobei das Mittel zur Bildung von Folgen (5) um eine Achse, die in der Nähe des Eingangs des Mittels zur Bildung von Folgen (5) und der Eingangsreihe angeordnet ist, drehbeweglich ist, um den Eingangsstrom an einem festen Punkt aufzunehmen und seinen Ausgang nacheinander vor verschiedenen Reihen des Ausgangsstroms zu positionieren, wobei das Mittel zur Bildung von Folgen (5) selbst die Umlenkeinheit (4) bildet.

5. Verfahren zur Verteilung von Gegenständen (2), die gemäß einem Eingangsstrom von Gegenständen (2) in Form einer einzigen Reihe bereitgestellt werden, in einen Ausgangsstrom von Gegenständen (2) in Form einer gesteuerten Vielzahl von Reihen mittels eines Systems nach einem der vorhergehenden Ansprüche, das die folgenden Schritte umfasst:
- Befördern der Gegenstände (2) in Richtung des Stroms,
- Eintreten der Gegenstände (2) in die Umlenkeinheit (4) und das Mittel zur Bildung von Folgen (5),
- Bilden einer Folge und Trennen der Folge von den Gegenständen (2) stromaufwärts und stromabwärts der Folge,
- Bewegen des stromabwärts gelegenen Endes des Mittels zur Bildung von Folgen (5) zu einer anderen Reihe des Ausgangsstroms,
- Einführen der Folge in die andere Reihe,
wobei das Verfahren nach dem Eintreten der Gegenstände (2) in das Mittel zur Bildung von Folgen (5) die folgenden Schritte umfasst:
- Aufstauen der stromaufwärts gelegenen Gegenstände (2) an einem ersten Finger (8), um sie von den stromabwärts des ersten Fingers (8) gelegenen Gegenständen (2) zu trennen, bis der nachfolgende Finger (8) und die Gegenstände (2) des Eingangsstroms in Eingriff kommen,
- Aufstauen der stromaufwärts gelegenen Gegenstände (2) an dem nachfolgenden Finger (8), um sie von den Gegenständen (2) zu trennen, die sich zwischen dem nachfolgenden Finger (8) und dem ersten Finger (8) befinden,
- Beschleunigen, durch Versenken des ersten Fingers (8), der Gegenstände (2), die sich zwischen dem ersten Finger (8) und dem nachfolgenden Finger (8) befanden, die eine Folge bilden, die sich in eine der Reihen des Ausgangsstroms einfädelt.

6. Verfahren nach dem vorhergehenden Anspruch, das vor dem Aufstauen der stromaufwärts gelegenen Gegenstände (2) an dem ersten Finger (8) die folgenden Schritte umfasst:
- Halten außerhalb der Reichweite der Finger (8) am Eingang von Mittel zur Bildung von Folgen (5),
- Führen der Gegenstände (2) zu dem ersten Finger (8), bis der erste Finger (8) und die Gegenstände (2) in Eingriff kommen.

## Claims

1. System for distributing objects that is intended to be interposed between an upstream machine delivering an inlet flow of objects (2) in the form of a single row and a downstream machine requiring an outlet flow of objects (2) in the form of a controlled plurality of rows, having a conveyor belt (3) configured to support and convey the objects (2) in the direction of the flow, a diverter (4) configured to divert the inlet flow towards one of the rows of the outlet flow, and a means for creating sets (5), configured to separate the inlet flow into sets of a predetermined quantity of objects (2), said means for creating sets (5) being disposed immediately upstream of the rows of the outlet flow and having a longitudinal passage (7) and at least one endless belt (9) that extends parallel to the passage (7) and that is wound around two rollers, **characterized by** at least two fingers (8) that are fastened to said at least one endless belt (9), each of said fingers (8) being intended, when it moves in the direction of the flow, to separate the objects (2) that are situated downstream from those situated upstream of said finger (8).

2. Distribution system according to the preceding claim, wherein said means for creating sets (5) has an inlet guide (10) configured to keep the inlet flow out of reach of said finger (8) over a first part of the length of the means for creating sets (5), and to bring the objects (2) into engagement with said finger (8) over a second part of the length of said means for creating sets (5) .

3. Distribution system according to either of the preceding claims, wherein said means for creating sets (5) is able to move in translation in the direction transverse to the direction of the flow, so as to be able to successively supply various rows of the outlet flow with objects (2), and said diverter (4) is disposed upstream of said means for creating sets (5), so as to divert said inlet flow towards the inlet of the means for creating sets (5).

4. Distribution system according to either of Claims 1 and 2, wherein said means for creating sets (5) is able to move in rotation about an axis disposed close to the inlet of the means for creating sets (5) and to the inlet row, so as to receive the inlet flow at a fixed point, and so as to position its outlet successively in front of various rows of the outlet flow, the means for creating sets (5) itself constituting the diverter (4).

5. Method for distributing objects (2) that are delivered in an inlet flow of objects (2) in the form of a single row and an outlet flow of objects (2) in the form of a controlled plurality of rows, by means of a system according to one of the preceding claims, involving the following steps:
- conveying of the objects (2) in the direction of the flow,
- entry of said objects (2) into the diverter (4) and the means for creating sets (5),
- constitution of a set, and separation of said set from the objects (2) upstream and downstream of said set,
- movement of the downstream end of the means for creating sets (5) towards another row of the outlet flow,
- introduction of said set into said other row,
said method involving, after the entry of said objects (2) into the means for creating sets (5), the following steps:
- accumulation of the upstream objects (2) against a first finger (8), with a view to separating them from the objects (2) downstream of said first finger (8) until the engagement between the following finger (8) and the objects (2) in the inlet flow,
- accumulation of the upstream objects (2) against the following finger (8), with a view to separating them from the objects (2) situated between said following finger (8) and said first finger (8),
- acceleration, by retraction of the first finger (8), of the objects (2) that were situated between the first finger (8) and the following finger (8), constituting a set that engages in one of the rows of the outlet flow.

6. Method according to the preceding claim, involving, before said accumulation of the upstream objects (2) against said first finger (8), the following steps:
- keeping out of reach of said fingers (8) at the inlet of means for creating sets (5),
- guiding of the objects (2) towards said first finger (8) until the engagement between said first finger (8) and the objects (2).
